Europäisches Patentamt

European Patent Office

Office européen des brevets

(11) Veröffentlichungsnummer: **0 399 068 B1**

(12) **EUROPÄISCHE PATENTSCHRIFT**

(45) Veröffentlichungstag der Patentschrift: **15.12.93**

(51) Int. Cl.5: **F02P 5/15**, G01L 23/22

(21) Anmeldenummer: **89109254.6**

(22) Anmeldetag: **23.05.89**

(54) Verfahren zur Klopfregelung von Brennkraftmaschinen.

(43) Veröffentlichungstag der Anmeldung:
**28.11.90 Patentblatt 90/48**

(45) Bekanntmachung des Hinweises auf die
Patenterteilung:
**15.12.93 Patentblatt 93/50**

(84) Benannte Vertragsstaaten:
**DE FR GB IT**

(56) Entgegenhaltungen:
**DE-A- 3 031 511      DE-A- 3 415 948**
**DE-A- 3 506 114      FR-A- 2 571 141**
**US-A- 4 274 379      US-A- 4 356 551**
**US-A- 4 466 406      US-A- 4 699 106**
**US-A- 4 750 103      US-A- 4 793 310**

(73) Patentinhaber: **SIEMENS AKTIENGESELL-**
**SCHAFT**
**Wittelsbacherplatz 2**
**D-80333 München(DE)**

(72) Erfinder: **Krebs, Stefan, Dr.-Ing.**
**Altdorfer Strasse 2A**
**D-8400 Regensburg(DE)**
Erfinder: **Aiglstorfer, Sebastian**
**Schnierlestrasse 10**
**D-8304 Pfaffenberg(DE)**

**Beschreibung**

Die Erfindung betrifft ein Verfahren zur Klopfregelung von Brennkraftmaschinen nach dem Oberbegriff des Anspruchs 1

Ein derartiges Verfahren ist bekannt aus der DE-A-34 34 823.

Bei dem bekannten Verfahren wird eine elektronische Kennfeldzündung mit überlagerter Klopfregelung beschrieben, bei der für jeden Zündzyklus ein Klopfwert aus dem Sensorsignal eines Klopfsensors bestimmt wird, indem dieses Sensorsignal verstärkt, in einem Bandpass gefiltert und anschließend gleichgerichtet wird. Das so aufbereitete Sensorsignal wird anschließend während eines Kurbelwellenwinkel-synchronen Meßfensters integriert und das Integrationsergebnis am Ende des Meßfensters in einen digitalen Wert - den Klopfwert - gewandelt, der anschließend mit einer Klopfschwelle verglichen wird. Übersteigt er diese, wird im nächsten Zündzyklus der Zündzeitpunkt in Richtung "spät" verstellt.

Nachteilig an einer Signalauswertung dieser Art ist unter anderem, daß eine grosse Meßfensterbreite (-dauer) erforderlich ist, um eine genügend große Empfindlichkeit zu erreichen. Auch haben Meßfensterbreite und Lage des Meßfensters im Zündzyklus einen direkten Einfluß auf den Klopfwert. Daher kann das Meßfenster nicht frei gewählt werden, um beispielsweise nicht von Klopfen herrührende, Störgeräusche auszublenden.

Bei dem bekannten Verfahren wird zwar erwähnt, daß die zeitliche Lage bzw. die Dauer eines Meßfensters in Abhängigkeit von wenigstens einem Betriebsparameter festgesetzt werden kann. Das bezieht sich jedoch auf ein zwischen den Zündungen in einem unkritischen Bereich liegendes Hilfsmeßfenster zur Gewinnung eines Signals für die Regelung des Verstärkungsfaktors eines Regelverstärkers für das Sensorsignal. Die Lage dieses Hilfsmeßfensters im Zündzyklus hat einen sehr geringen, seine Dauer jedoch einen direkten Einfluß auf das Meßergebnis.

Aufgabe der Erfindung ist es daher, ein Verfahren zur Klopfregelung von Brennkraftmaschinen anzugeben, bei welchem die Lage und die Dauer des Meßfensters im Zündzyklus in weiten Grenzen veränderbar ist, ohne das Meßergebnis und daraus abgeleitete Größen zu beeinträchtigen.

Diese Aufgabe wird erfindungsgemäß durch die im Kennzeichen des Anspruchs 1 genannten Merkmale gelöst.

Die Erfindung hat den Vorteil, daß das Meßfenster in weiten Grenzen verschoben und seine Dauer verändert werden kann, ohne das Meßergebnis zu verändern, sofern diese drei größten Abtastwerte im Meßfenster verbleiben. Auf diese Weise können nicht von Motorklopfen herrührende Abtastwerte, die unerwünscht sind, aus dem Meßfenster entfernt werden, sofern sie nicht mit diesen klopfrelevanten Abtastwerten zeitlich zusammenfallen.

Die Erfindung ermöglicht es, für jeden Betriebspunkt ein Messfenster mit den Größen Anfang, Abtastfrequenz und Ende oder Anzahl der Abtastwerte vorzugeben, wobei diese Werte in Tabellen oder Kennfeldern abgelegt sein können.

Betriebspunkte sind bekannterweise von wenigstens zwei Betriebsparametern, nämlich der Motordrehzahl und der Motorlast abhängig. Weitere Betriebsparameter sowohl für diese Betriebspunkte als auch für andere Größen können die Motor- oder Fahrzeugbeschleunigung, die Motortemperatur usw. sein.

Der mittels des Meßfensters ermittelte Klopfwert wird erst als Motorklopfen gewertet, wenn er eine vorgegebene Klopfschwelle übersteigt. Diese Klopfschwelle wird ebenfalls aus in vorangegangenen Zündzyklen ermittelten Klopfwerten gebildet. Es wird aus einer vorgegebenen Zahl vorheriger Klopfwerte durch gleitende Mittelwertbildung ein Geräuschwert berechnet. Aus diesem Geräuschwert entsteht die Klopfschwelle im einfachsten Fall durch entsprechende Verstärkung. Zweckmäßig ist es, den Geräuschwert mit einem vorgegebenen Faktor,der multiplikative Einflüsse des Motorgeräuschs repräsentiert, zu multiplizieren und zu diesem Produkt einen Summanden, der additive Motorgeräuscheinflüsse darstellt, zu addieren. Durch unterschiedliche Gewichtung des Faktors bzw. des Summanden kann die Klopfschwelle beliebig verändert und dem jeweiligen Motortyp optimal angepaßt werden.

Faktor und Summand können ebenfalls in betriebsparameterabhängigen Kennlinien oder Kennfeldern abgelegt sein.

Mit einer von wenigstens einem Betriebsparameter, beispielsweise der Motordrehzahl, abhängigen Verstärkung kann auch das Sensorsignal hinsichtlich einer optimalen Ausnutzung des Meßbereiches und der begrenzten Auflösung des Analog-Digital-Wandlers gesteuert oder geregelt werden. Hierzu kann der Verstärkungsfaktor als von der Motordrehzahl abhängige Kennlinie gespeichert sein und in Form eines pulsweiten-modulierten Digitalsignals der Signalaufbereitungs-Schaltung zugeführt werden. Damit besteht auch die Möglichkeit, den Sensor auf Funktionsfähigkeit zu prüfen (Minimalwert des Sensorsignals bei vorgegebener Verstärkung).

Eine weitere Verfeinerung des erfindungsgemäßen Verfahrens kann dadurch erreicht werden, daß wenigstens eine weitere Klopfschwelle vorgesehen wird, die auf einfache Weise aus der ermittelten Klopfschwelle durch Multiplikation mit einem vorgegebenen, beispielsweise konstanten Faktor, ermittelt wird. Je nachdem, welche dieser Klopfschwellen von einem Klopfwert überschritten wird, kann damit die Klopfintensität dieses Klopfwertes ermittelt werden. Je nach der Klopfintensität eines Klopfwertes kann die darauf folgende Zündzeitpunkt-Spätverstellung unterschiedlich groß sein.

Dadurch wird es auch möglich, Klopfwerte, die eine vorgegebene Klopfschwelle überschreiten, nicht zur Berechnung des Geräuschwertes heranzuziehen. Auf diese Weise wird ein Anheben der Klopfschwellen infolge übermäßigen Motorklopfens vermieden.

Zusätzlich zu einem wenigstens von der Motordrehzahl und der Motorlast abhängigen Grundkennfeld kann noch eine Grenzkennlinie oder ein Grenzkennfeld vorgesehen sein, in welchem Betriebsparameterabhängig Werte für eine maximal zulässige Spätverstellung der Zündzeitpunkte gespeichert sind.

Eine optimale Klopfregelung kann dann erreicht werden, wenn das erfindungsgemäße Verfahren für jede Zylindergruppe oder für jeden einzelnen Zylinder der Brennkraftmaschine getrennt durchgeführt wird.

Die Erfindung wird anhand der Figuren näher erläutert; es zeigen:

Figur 1 ein Blockschaltbild über die Aufbereitung des Sensorsignals,

Figur 2 ein Diagramm über die Abtastung des Sensorsignals und

Figur 3 Den Verlauf des geregelten Zündwinkels über der Zeit.

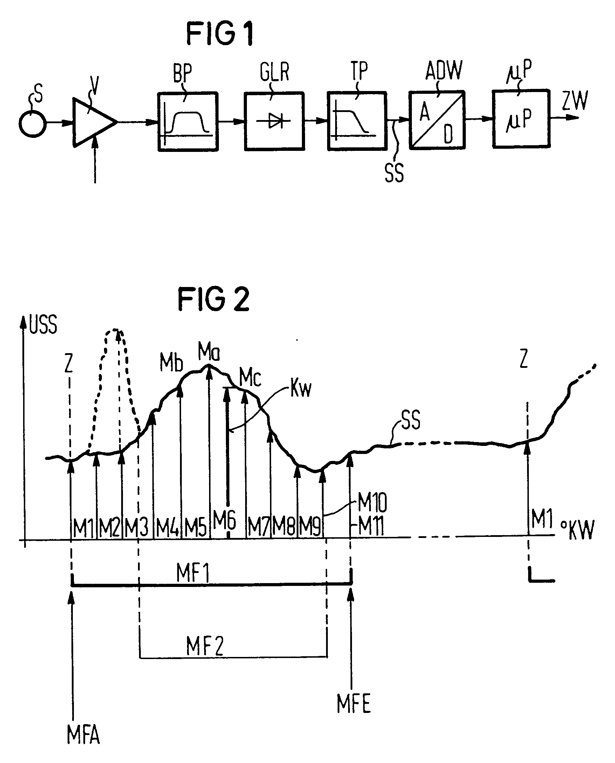

Das Blockschaltbild nach Figur 1 zeigt einen an geeigneter Stelle eines Zylinders einer Brennkraftmaschine angeordneten Klopfsensor S, dessen Ausgangssignal in einem Verstärker V verstärkt, in einem Bandpass BP gefiltert, in einem nachfolgenden Gleichrichter GLR gleichgerichtet und schließlich in einem Tiefpassfilter TP geglättet wird. Das Ausgangssignal des Tiefpassfilters TP, in Figur 2 dargestellt, wird als aufbereitetes Sensorsignal SS bezeichnet. Dieses Signal wird in einem A/D-Wandler ADW digitalisiert und anschließend in einem Mikroprozessor uP zu einem Ansteuersignal für einen Zündwinkelgeber des betrachteten Zylinders verarbeitet.

Figur 2 zeigt einen typischen Amplitudenverlauf USS (Ordinate) des aufbereiteten Sensorsignals SS über dem Kurbelwellenwinkel KW (Abszisse) zwischen zwei Zündungen Z.

Mit Beginn jeder Zündung wird ein Meßfenster MF1 geöffnet, dessen Anfang MFA hier mit dem Zündzeitpunkt Z der Zündung zusammenfällt.

Anfang und Ende MFA, MFE des Meßfensters MF1 sind betriebspunktabhängig in Kennfeldern gespeichert, wobei jeder Betriebspunkt von zumindest Motordrehzahl n und Motorlast L bestimmt wird, also

$$MFA, MFE = f(n, L)$$

Alternativ kann das Ende des Meßfensters auch unmittelbar durch eine vorgegebene Anzahl von Abtastwerten bestimmt sein. Die Abtastfrequenz f und die Zahl der Abtastwerte M können ebenfalls in betriebspunktabhängigen Kennfeldern oder betriebsparameterabhängigen Kennlinien gespeichert sein. Die innerhalb des Meßfensters MF1 gewonnenen Meßwerte M1 bis M11 werden nach ihrer Digitalisierung zwischengespeichert, beispielsweise in einem FIFO-Speicher (first - in -first - out), und nacheinander abgearbeitet, wobei die in diesem Ausführungsbeispiel drei größten Werte Ma, Mb und Mc ermittelt werden.

Aus diesen drei größten Werten wird sodann der Mittelwert gebildet, welcher als Klopfwert Kw für den betrachteten Zündzyklus gilt:

$$Kw = (Ma + Mb + Mc) / 3$$

Der Klopfwert Kw ist also der "gemittelte maximale Abtastwert" bei der auf eine Zündung folgenden Gemischverbrennung in einem Zylinder.

Als Motorklopfen wird dieser Klopfwert Kw erst gewertet, wenn er eine vorgegebene Klopfschwelle KS übersteigt.

Aus Figur 2 ist deutlich zu sehen, daß sich an dem Betrag des ermittelten Klopfwertes Kw nichts ändert, wenn das Meßfenster auf MF2 eingeengt wird, z. B., um punktiert dargestellte Verfälschungen des aufbereiteten Sensorsignals SS, die von anderen Geräuschquellen stammen können, auszublenden. Eine optimale Anpassung des Meßfensters an den jeweiligen Betriebspunkt ist somit auf einfache Weise möglich.

Die zur Ermittlung von Motorklopfen erforderliche Klopfschwelle KS wird aus Klopfwerten Kw vorangegangener Zündungen ermittelt. Dazu wird zunächst aus einer vorgegebenen Zahl x der letzten aufeinander folgenden Klopfwerte Kw ein gleitender Mittelwert, der sogenannte Geräuschwert GW gebildet, wobei die Zahl x abhängig vom Betriebspunkt (oder nur von der Motordrehzahl) und der Beschleunigung der Kurbelwelle der Brennkraftmaschine sein kann:

x = f (n, L, ± b)

Die Abhängigkeit von der Kurbelwellenbeschleunigung ist insofern sinnvoll, als ein Mittelwert, der bei großer Beschleunigung (oder Verzögerung) aus weniger Werten gebildet wird, sich schneller verändert, als wenn er aus einer großen Zahl von Werten gebildet wird, was bei stationärem Betrieb sinnvoll ist, um einzelne "Ausreißer" zu eliminieren. So kann in diesem Ausführungsbeispiel die Zahl x zwischen etwa 2 und 25 variieren:

$$GW = \left[ \sum_{1}^{x} Kw\,(-x) \right] \Big/ x$$

Das Minuszeichen in der Klammer soll dabei auf vorherige Werte hinweisen.Der so gebildete Geräuschwert GW wird mit einem Faktor Km multipliziert, der im wesentlichen multiplikative Einflußgrößen wie Empfindlichkeitsänderungen des Klopfsensors, Änderungen der Signalverstärkung und anderes Signalsübertragungs- und -dämpfungsverhalten des Motors berücksichtigt.

Zu diesem Produkt wird noch ein Summand Ka addiert, der hauptsächlich additive Einflußgrößen wie Signaloffset der Regelelektronik, mechanische Störsignale des Motors und anderes abdeckt.

Die Klopfschwelle KS wird also aus dem Geräuschwert GW, dem Faktor Km und dem Summand Ka gebildet, wobei diese Großen wieder in (Kennlinien oder) betriebspunktabhängigen Kennfeldern abgespeichert sein können:

KS = GW • Km + Ka, mit Km, Ka = f(n, L)

Durch entsprechende Wahl des Faktors Km und des Summanden Ka können diese unterschiedlich bewertet oder auch abgeschaltet werden, z. B. Ka = 0. In der Praxis werden diese Großen in Versuchen ermittelt und optimiert, bevor sie in Kennfeldern abgespeichert werden.

Durch die Größen Km und Ka wird die Klopfschwelle KS soweit erhöht, daß die Klopfwerte Kw bei normaler Verbrennung ohne Motorklopfen sie nicht übersteigen.

Um nicht nur feststellen zu können, ob Motorklopfen vorliegt oder nicht, sondern um auch eine Aussage über die Stärke des Motorklopfens machen zu können, werden durch Multiplikation der Klopfschwelle KS mit in diesem Ausführungsbeispiel konstanten Faktoren (diese können z. B. auch drehzahl- oder betriebspunktabhängig sein) weitere, höhere Klopfschwellen, hier zwei - KS1, KS2 - erzeugt, wodurch es möglich ist, drei verschiedene Klopfintensitäten I voneinander zu unterscheiden:

I1: KS ≤ Kw< KS1,
I2: KS1 ≤ Kw< KS2,
I3: KS2 ≤ Kw,

je nachdem, ob nur die Klopfschwelle KS, die beiden Klopfschwellen KS und KS1 oder alle drei Klopfschwellen KS, KS1 und KS2 von dem momentanen Klopfwert Kw überschritten werden.

Dementsprechend kann auf Motorklopfen unterschiedlicher Intensität auch unterschiedlich reagiert werden.

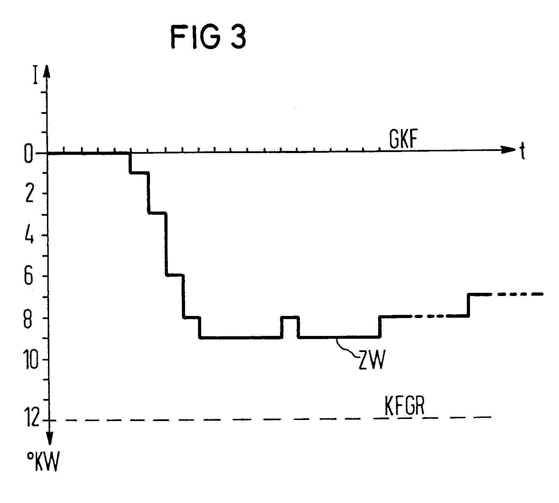

Dies ist aus Figur 3 zu entnehmen, in welcher der Verlauf des Zündwinkels ZW über der Zeit (Abszisse) aufgetragen ist.

Auf der Ordinate entspricht deren Schnittpunkt mit der Abszisse einem dem momentanen Betriebspunkt zugeordneten, in einem Grundkennfeld GKF gespeicherten Zündwinkel. Zündwinkel aus diesem Grundkennfeld werden beim Starten der Brennkraftmaschine, in einem bestimmten Kennfeldbereich (unterhalb vorgegebener Motordrehzahl- und Motorlastwerte) sowie bei Ausfall der Klopfregelung verwendet.

In Ordinatenrichtung nach unten sind Kurbelwellenwinkel in Richtung Spätverstellung, ausgehend von dem momentanen Zündwinkel des Grundkennfeldes GKF, aufgetragen, wobei eine strichlierte Linie einen dem momentanen Wert des Grundkennfeldes zugeordneten Wert eines Grenzkennfeldes KFGR für eine maximale Spätverstellung des Zündwinkels darstellt. Dieses Grenzkennfeld KFGR ist ebenfalls betriebspunktabhängig gespeichert (es kann vereinfachend auch durch eine Konstante, einen konstanten Abstand vom Grundkennfeld GKF festlegend, bestimmt werden), so daß zwei mit unterschiedlichen Abständen übereinanderliegende Kennfeld-"Gebirge" über Motordrehzahl und Motorlast gespeichert sind, aus welchen die dem jeweiligen Betriebspunkt zugeordneten Werte, in Figur 3 dargestellt, entnommen sind.

In diesem Diagramm ist in Ordinatenrichtung nach oben die Klopfintensität I aufgetragen, wobei die Abszisse einem nicht klopfenden Zustand zugeordnet ist. Bei Motorklopfen (durch kleine Dreiecke angedeutet) mit Intensität I1 wird der Zündwinkel ZW um 1 Grad KW, mit Intensität I2 um 2 Grad KW und mit Intensität I3 um 3 Grad KW in Richtung "Spät" verstellt, maximal so lange, bis das Grenzkennfeld KFGR erreicht ist.

Nach einer vorgegebenen Zahl klopffreier Zündungen wird der Zündwinkel wieder um einen vorgegebenen Betrag, hier 1 Grad KW in Richtung "Früh" verstellt usw., bis entweder das Grundkennfeld GKF erreicht ist, oder bis erneut Motorklopfen auftritt.

Auf diese Weise wird fortlaufend der Zündwinkel geregelt.

**Patentansprüche**

1. Verfahren zur Klopfregelung von Brennkraftmaschinen, wobei das Sensorsignal (SS) eines Klopfsensors innerhalb eines für jeden Zündzyklus vorgegebenen Meßfensters (MF) zur Bildung von Abtastwerten abgetastet wird, wobei von den Abtastwerten (M) digitale Klopfwerte (Kw) abgeleitet und mit einer Klopfschwelle (KS) verglichen werden, und wobei eine zeitweise Spätverstellung des Zündwinkels (ZW) erfolgt, wenn ein Klopfwert die Klopfschwelle übersteigt,
**dadurch gekennzeinet**,
   - daß das Sensorsignal (SS) mit einer vorgegebenen Abtastfrequenz (f) abgetastet wird,
   - daß als Klopfwert (Kw) der Mittelwert aus einer vorgegebenen Anzahl der relativ größten Abtastwerte (Ma, Mb, Mc) bestimmt wird, und
   - daß zur Bildung der Klopfschwelle (KS) ein Geräuschwert (GW) herangezogen wird, der durch gleitende Mittelwertbildung aus einer vorgegebenen Zahl (x) vorheriger Klopfwerte (Kw) berechnet wird.

2. Verfahren nach Anspruch 1,
**dadurch gekennzeichnet**,
daß der Beginn (MFA) des Meßfensters (MF) von wenigstens einem Betriebsparameter abhängig ist.

3. Verfahren nach Anspruch 1,
**dadurch gekennzeichnet**,
daß die Abtastfrequenz (f) von wenigstens einem Betriebsparameter abhängig ist.

4. Verfahren nach Anspruch 1,
**dadurch gekennzeichnet**,
daß die Zahl der Abtastwerte von wenigstens einem Betriebsparameter abhängig ist.

5. Verfahren nach Anspruch 1,
**dadurch gekennzeichnet**,
daß das Ende (MFE) des Meßfensters (MF) von wenigstens einem Betriebsparameter abhängig ist.

6. Verfahren nach Anspruch 1,
**dadurch gekennzeichnet**,
daß die für die Berechnung des Geräuschwertes (GW) vorgegebene Zahl (x) vorheriger Klopfwerte (Kw) von wenigstens einem Betriebsparameter abhängig ist.

7. Verfahren nach Anspruch 1,
**dadurch gekennzeichnet**,
daß der Geräuschwert (GW) mit einem Faktor (Km) beaufschlagt wird, der von wenigstens einem Betriebsparameter abhängig ist.

**8.** Verfahren nach Anspruch 1,
**dadurch gekennzeichnet**,
daß der Geräuschwert (GW) mit einem Summanden (Ka) beaufschlagt wird, der von wenigstens einem Betriebsparameter abhängig ist.

**9.** Verfahren nach Anspruch 1,
**dadurch gekennzeichnet**,
daß für das Sensorsignal (SS) und/oder die Klopfschwelle (KS) eine gesteuerte oder geregelte Verstärkung vorgesehen ist, deren Verstärkungsfaktor von wenigstens einem Betriebsparameter abhängig ist.

**10.** Verfahren nach Anspruch 1,
**dadurch gekennzeichnet**,
daß die Klopfregelung oberhalb einer vorgegebenen Klopfschwelle (KS) erfolgt, die von wenigstens einem Betriebsparameter abhängig ist.

**11.** Verfahren nach Anspruch 1,
**dadurch gekennzeichnet**,
daß wenigstens eine weitere Klopfschwelle (KS1, KS2) durch Multiplikation der Klopfschwelle (KS) mit einem vorgegebenen Faktor vorgesehen ist.

**12.** Verfahren nach Anspruch 1,
**dadurch gekennzeichnet**,,
daß eine Klopfintensität (I1, I2, I3) eines Klopfwertes (Kw) durch Vergleich dieses Klopfwertes mit den Klopfschwellen (KS, KS1, KS2) ermittelt wird.

**13.** Verfahren nach Anspruch 1,
**dadurch gekennzeichnet**,
daß Klopfwerte (Kw), die eine vorgegebene Klopfschwelle (KS, KS1, KS2) überschreiten, nicht zur Berechnung des Geräuschwertes (GW) herangezogen werden.

**14.** Verfahren nach Anspruch 12,
**dadurch gekennzeichnet**,
daß der Betrag der Zündwinkel-Spätverstellung abhängig von der Klopfintensität (I) des Klopfwertes (Kw) ist.

**15.** Verfahren nach Anspruch 1,
**dadurch gekennzeichnet**,
daß ein von wenigstens zwei Betriebsparametern abhängiges Grundkennfeld (GKF) vorgegeben ist, aus welchem die Zündwinkel (ZW) entnommen werden.

**16.** Verfahren nach Anspruch 15,
**dadurch gekennzeichnet**,
daß eine von wenigstens einem Betriebsparameter abhängige Grenzkennlinie vorgesehen ist, welche die maximal zulässige Spätverstellung der im Grundkennfeld (GKF) gespeicherten Zündwinkel (ZW) angibt.

**17.** Verfahren nach Anspruch 1,
**dadurch gekennzeichnet**,
daß ein von wenigstens zwei Betriebsparametern abhängiges Grenzkennfeld (KFGR) für die maximal zulässige Spätverstellung der Zündwinkel (ZW) vorgesehen ist.

**18.** Verfahren nach Anspruch 1,
**dadurch gekennzeichnet**,
daß es für jeden Zylinder oder für jede Zylindergruppe der Brennkraftmaschine getrennt durchgeführt wird.

EP 0 399 068 B1

**Claims**

1. Method for knocking control in combustion engines, the sensor signal (SS) of a knock sensor being sampled within a measurement window (MF) (specified for each ignition cycle) for the purpose of forming sampled values, specified digital knock values (Kw) being derived from the sampled values (M) and compared with a knock threshold (KS), and a temporary retardation of the ignition angle (ZW) taking place if a knock value exceeds the knock threshold, characterized in that
   - the sensor signal (SS) is sampled at a predetermined sampling frequency (f),
   - the average of a predetermined number of the largest sampled values (Ma, Mb, Mc) in relative terms is determined as the knock value (Kw) and,
   - to form the knock threshold (KS), use is made of a noise value (GW), which is calculated by sliding average formation from a predetermined number (x) of previous knock values (Kw).

2. Method according to Claim 1, characterized in that the beginning (MFA) of the measurement window (MF) is dependent on at least one operating parameter.

3. Method according to Claim 1, characterized in that the sampling frequency (f) is dependent on at least one operating parameter.

4. Method according to Claim 1, characterized in that the number of sampled values is dependent on at least one operating parameter.

5. Method according to Claim 1, characterized in that the end (MFE) of the measurement window (MF) is dependent on at least one operating parameter.

6. Method according to Claim 1, characterized in that the number (x) of previous knock values (Kw) specified for the calculation of the noise value (GW) is dependent on at least one operating parameter.

7. Method according to Claim 1, characterized in that the noise value (GW) has applied to it a factor (Km) which is dependent on at least one operating parameter.

8. Method according to Claim 1, characterized in that the noise value (GW) has applied to it a summand (Ka) which is dependent on at least one operating parameter.

9. Method according to Claim 1, characterized in that a controlled or regulated amplification is provided for the sensor signed (SS) and/or the knock threshold (KS), the gain factor of which is dependent on at least one operating parameter.

10. Method according to Claim 1, characterized in that knocking control takes place above a predetermined knock threshold (KS), which is dependent on at least one operating parameter.

11. Method according to Claim 1, characterized in that at least one further knock threshold (KS1, KS2) is provided by multiplication of the knock threshold (KS) by a predetermined factor.

12. Method according to Claim 1, characterized in that a knock intensity (I1, I2, I3) of a knock value (Kw) is determined by comparing this knock value with the knock thresholds (KS, KS1, KS2).

13. Method according to Claim 1, characterized in that knock values (Kw) which exceed a predetermined knock threshold (KS, KS1, KS2) are not used for the calculation of the noise value (GW).

14. Method according to Claim 12, characterized in that the amount of the ignition-angle retardation is dependent on the knock intensity (I) of the knock value (Kw).

15. Method according to Claim 1, characterized in that a basic characteristic map (GKF), which is dependent on at least two operating parameters and from which the ignition angles (ZW) are taken, is predetermined.

7

**16.** Method according to Claim 15, characterized in that a limiting characteristic, which is dependent on at least one operating parameter and which indicates the maximum permissible retardation of the ignition angles (ZW) stored in the basic characteristic map (GKF), is provided.

**17.** Method according to Claim 1, characterized in that a limiting characteristic map (KFGR), dependent on at least two operating parameters, for the maximum permissible retardation of the ignition angles (ZW) is provided.

**18.** Method according to Claim 1, characterized in that it is carried out separately for each cylinder or for each cylinder group of the combustion engine.

**Revendications**

**1.** Procédé pour régler le cognement dans des moteurs à combustion interne, selon lequel le signal (SS) d'un capteur du cognement est échantillonné, au cours d'une fenêtre de mesure (MF) prédéterminée pour chaque cycle d'allumage, en vue de former des valeurs d'échantillonnage, des valeurs numériques de cognement (Kw) étant dérivées des valeurs d'échantillonnage (M) et étant comparées à un seuil de cognement (KS), et selon lequel un retardement de l'angle d'allumage (ZW) est exécuté lorsqu'une valeur de cognement dépasse le seuil de cognement, caractérisé par le fait
- que le signal (SS) du capteur est échantillonné avec une fréquence d'échantillonnage prédéterminée (f),
- que la moyenne formée à partir d'un nombre prédéterminé des valeurs d'échantillonnage relativement maximales (Ma, Mb, Mc) est déterminée en tant que valeur de cognement (Kw), et
- que pour la formation du seuil de cognement (KS), on utilise une valeur de bruit (GW), qui est calculée au moyen d'une formation continue de la moyenne à partir d'un nombre prédéterminé (x) de valeurs de cognement (Kw) précédentes.

**2.** Procédé suivant la revendication 1, caractérisé par le fait que le début (MFA) de la fenêtre de mesure (MF) dépend d'au moins un paramètre de service.

**3.** Procédé suivant la revendication 1, caractérisé par le fait que la fréquence d'échantillonnage (f) dépend d'au moins un paramètre de service.

**4.** Procédé suivant la revendication 4, caractérisé par le fait que le nombre des valeurs d'échantillonnage dépend d'au moins un paramètre de service.

**5.** Procédé suivant la revendication 1, caractérisé par le fait que la fin (MFE) de la fenêtre de mesure (MF) dépend d'au moins un paramètre de service.

**6.** Procédé suivant la revendication 1, caractérisé par le fait que le nombre (x), qui est prédéterminé pour le calcul de la valeur de bruit (GW), de valeur de cognement (Kw) précédentes dépend d'au moins un paramètre de service.

**7.** Procédé suivant la revendication 1, caractérisé par le fait que la valeur de bruit (GW) est chargée par un facteur (Km), qui dépend d'au moins un paramètre de service.

**8.** Procédé suivant la revendication 1, caractérisé par le fait que la valeur de bruit (GW) est chargée par un nombre à ajouter (Ka), qui dépend d'au moins un paramètre de service.

**9.** Procédé suivant la revendication 1, caractérisé par le fait que pour le signal (SS) du capteur et /ou le seuil de cognement (KS), il est prévu une amplification commandée ou réglée, dont le facteur d'amplification dépend d'au moins un paramètre de service.

**10.** procédé suivant la revendication 1, caractérisé par le fait que le réglage du cognement s'effectue au-dessus d'un seuil de cognement (KS) prédéterminé, qui dépend d'au moins un paramètre de service.

**11.** Procédé suivant la revendication 1, caractérisé par le fait qu'au moins un autre seuil de cognement (KS1, KS2) est prévu par multiplication du seuil de cognement (KS) par un facteur prédéterminé.

**12.** Procédé suivant la revendication 1, caractérisé par le fait qu'une intensité de cognement (I1, I2, I3) d'une valeur de cognement (Kw) est déterminée par comparaison de cette valeur de cognement aux seuils de cognement (KS, KS1, KS2).

**13.** Procédé suivant la revendication 1, caractérisé par le fait que les valeurs de cognement (Kw), qui dépassent un seuil de cognement prédéterminé (KS, KS1, KS2), ne sont pas utilisées pour le calcul de la valeur de bruit (GW).

**14.** Procédé suivant la revendication 12, caractérisé par le fait que la valeur du retardement de l'angle d'allumage dépend de l'intensité (I) de la valeur de cognement (Kw).

**15.** Procédé suivant la revendication 1, caractérisé par le fait qu'un champ caractéristique de base (GKF), qui dépend d'au moins deux paramètres de service d'où peut être tiré l'angle d'allumage (ZW), est prédéterminé.

**16.** Procédé suivant la revendication 15, caractérisé par le fait qu'il est prévu une courbe caractéristique limite, qui dépend d'au moins un paramètre de service et qui indique le retard maximal admissible de l'angle d'allumage (ZW) mémorisé dans le champ de caractéristiques de base (GKF).

**17.** Procédé suivant la revendication 1, caractérisé par le fait qu'un champ de caractéristiques limites (KFGR), qui dépend d'au moins deux paramètres de service, est prévu pour le retard maximal admissible de l'angle d'allumage (ZW).

**18.** Procédé suivant la revendication 1, caractérisé par le fait qu'il est mis en oeuvre séparément pour chaque cylindre ou pour chaque groupe de cylindres du moteur à combustion interne.

# FIG 1

# FIG 2

# FIG 3